# EUROPÄISCHE PATENTSCHRIFT

(11) **EP 0 382 931 B1**
(45) Veröffentlichungstag und Bekanntmachung des Hinweises auf die Patenterteilung: **18.11.1993**
(21) Anmeldenummer: 89123270.4
(22) Anmeldetag: 15.12.1989
(51) Int. Cl.: C08G 65/20

(54) **Polyether, deren Herstellung und Verwendung**
Polyether, its preparation and use
Polyéther, sa préparation et application

(30) Priorität: 15.02.1989 DE 3904488
(43) Veröffentlichungstag der Anmeldung: 22.08.1990
(73) Patentinhaber: HÜLS AKTIENGESELLSCHAFT, 45764 Marl (DE)
(72) Erfinder: Stehr, Michael, Dr., D-4650 Gelsenkirchen (DE); Voges, Heinz-Werner, Dr., D-4270 Dorsten 21 (DE)

(56) Entgegenhaltungen:
- EP-A- 0 064 236
- DE-B- 1 027 400
- Journal of Polymer Science Part A-1 vol. 9, 1971, pages 265- - 279; J.M.HAMMOND et al.: "Cationic Copolymerisation of Tetrahydrofuran with Epoxides. I. Polymerisation Mechanism in the Presence of a glycol."
- DATABASE WPI, no. 70-24141R Derwent Publications Ltd,London;BG, & SU-A-245366

## Beschreibung

Die vorliegende Erfindung beschreibt die Darstellung von neuen Polyethern, die als Schmiermittel, insbesondere als Getriebeschmiermittel, verwendet werden können.

Die Verwendung von Polyethern als Schmiermittel oder als Zusatz in herkömmlichen Schmierölen auf Mineralölbasis ist bekannt. Der Stand der Technik sowie die im allgemeinen an solche Schmiermittel gestellten Anforderungen werden insbesonders in der EP-PS 0 064 236 beschrieben. Geeignete Kenngrößen zur Beurteilung der Güte eines Schmieröls sind der Viskositätsindex VI und die mittels Reichert-Verschleißwaage bestimmte Reibungszahl. Dabei zeichnen sich qualitativ hochwertige Schmierstoffe durch einen hohen Viskositätsindex, d. h. eine weitgehende Temperaturunabhängigkeit der Viskosität, sowie kleine Reibungszahlen aus. Weitere Kriterien sind Mineralölverträglichkeit, Hydrophobie, niedriger Stockpunkt und hohe Wärmebelastbarkeit.

Nach EP-PS 0 064 236 werden als Schmiermittel verwendbare Polyether durch Copolymerisation eines Tetrahydrofurans mit terminalen Oxiranen in Gegenwart einer mono- oder bifunktionellen Hydroxyverbindung erhalten. Bei den dort zur Anwendung kommenden Oxiranen handelt es sich um langkettige 1,2-Epoxyalkane mit 8-26 Kohlenstoffatomen, die entweder allein oder aber im Gemisch mit Niederalkylenoxid-Komponenten, wie Ethylen-, Propylen-, und/oder Butylenoxid, als Comonomere eingesetzt werden. Diese langkettigen 1,2-Epoxyalkane können zu einem gewissen Teil durch Glycidylester von Neoalkancarbonsäuren ersetzt werden (s. Beipiel 7). Durch diese Maßnahme resultiert allerdings ein Polyether mit erheblich verschlechtertem Viskositäts-/Temperatur-Verhalten, wie der Vergleich mit einem Polyether ähnlichen Molekulargewichts zeigt, der keine Glycidylester-Bausteine enthält (siehe Beispiel 1). Glycidylester stellen also keinen adäquaten Ersatz für 1,2-Epoxyalkane dar; die Verwendung der letztgenannten Substanzgruppe scheint damit essentiell für die Synthese von Polyethern zu sein, die dem in der EP-PS 0 064 236 geforderten Eigenschaftsprofil genügen sollen.

Es war Aufgabe der Erfindung, nach neuen Polyethern zu suchen, die gute schmiertechnische Eigenschaften aufweisen.

Überraschend wurde nun gefunden, daß hochwertige Polyether-Schmieröle erhalten werden, wenn Tetrahydrofuran mit Glycidylethern der Formel 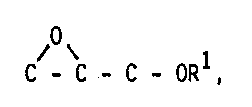
worin R¹ = Alkyl
in Gegenwart von Alkanolen der allgemeinen Formel

R²OH

,

worin R² = Alkyl, Hydroxyalkyl
copolymerisiert werden.

Gegenstand der Erfindung sind daher Polyether, erhältlich durch Polymerisation von Tetrahydrofuran mit Glycidylethern der Formel 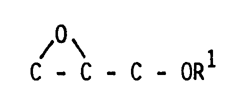
in Gegenwart von Alkanolen der Formel R²-OH, wobei
- R¹ =: Alkylgruppen mit 3-20 Kohlenstoffatomen und
- R² =: Alkylgruppen mit 8-24 Kohlenstoffatomen sowie Cycloalkylgruppen mit 6-12 Kohlenstoffatomen im Ring, oder Hydroxyalkylgruppen mit 4-36 Kohlenstoffatomen, sowie Cycloalkanolgruppen mit 6-15 Kohlenstoffatomen im Ring bedeuten.
ausgenommen Glycidyl-n-propylether.

Die Copolymerisation von Tetrahydrofuran und Glycidylether kann in an sich bekannter Weise vorgenommen werden (Angew. Chemie 72, 927-934 (1960), indem man die Komponenten in Gegenwart eines als Molekulargewichtsregler wirksamen Alkanols unter der Katalyse von Lewis-Säuren, wie z. B. Aluminiumchlorid, Eisen-(III)-chlorid, Zinn-(IV)-chlorid, Titantetrachlorid, Antimonpentachlorid und Bortrifluorid sowie seiner Addukte, reagieren läßt. Bevorzugte Lewis-Säure ist Bortrifluorid-Diethyletherat.

Im erfindungsgemäßen Verfahren wird die als Polymerisationsstarter verwendete Lewis-Säure in einer Menge von 0,01 bis 5 Gew.-%, bezogen auf das gesamte Reaktionsgemisch, eingesetzt.

Das erfindungsgemäße Verfahren wird im allgemeinen im Temperaturbereich von -10 °C bis 100 °C, bevorzugt von 0 bis 80 °C, inbesondere bevorzugt von 20 bis 60 °C, durchgeführt.

Man kann das erfindungsgemäße Verfahren zur Herstellung der erfindungsgemäßen Polyether bei Normaldruck oder bei höherem Druck, bevorzugt bei Normaldruck, durchführen.
Typische erfindungsgemäß eingesetzte Glycidylether sind z. B. n-Butyl-, n-Hexyl-, n-Octyl-, n-Decyl-, n-Dodecyl-, n-Tetradecylglycidylether sowie 2-Ethylhexyl-, 2-Propylheptyl- und iso-Tridecylglycidylether. Bevorzugt eingesetzte Alkanole sind 1-Octanol, 1-Nonanol, 1-Decanol-, 1-Dodecanol, 1-Tetradecanol, 1-Hexadecanol, 1-Octadecanol, 1,6-Cyclohexandimethanol, Cyclooctanol, Cyclooctandiol, Cyclooctandimethanol und Cyclododecanol.

Glycidylether sind an sich aus technisch reichlich verfügbaren Ausgangsstoffen gut zugänglich. Man erhält sie beispielsweise durch Umsetzung von Epichlorhydrin mit Alkanolen zu den 3-Alkoxy-1-chlor-2-propanolen und nachfolgende intramolekulare Ringschlußreaktion unter Einwirkung von Alkalihydroxid; jedoch ist das Herstellungsverfahren für die eingesetzten Glycidylether nicht Gegenstand dieser Erfindung.

Die schmierstofftechnischen Eigenschaften der erfindungsgemäßen Polyether können nun durch Vorauswahl eines bestimmten Glycidylethers und eines als Molekulargewichtsregler eingesetzten Alkanols sowie durch Variation des Molverhältnisses von Alkanol zu Tetrahydrofuran und Glycidylether in weiten Grenzen bestimmt werden. Das molare Einsatzverhältnis von Alkanolen zu Tetrahydrofuran und Glycidylether schwankt, je nach angestrebter Viskositätslage des Polyether-Öls, die ja vom Molekulargewicht, d. h. von der Anzahl der Monomereinheiten pro Polyethermolekel abhängt, zwischen 1:5 und 1:200. Dabei sind Zusammensetzungen erwünscht, in denen das molare Einsatzverhältnis Tetrahydrofuran/Glycidylether (THF/GE) 1:6 bis 15:1, bevorzugt 1:3 bis 8:1, insbesondere bevorzugt 1:1 bis 5:1, beträgt. Niedrigviskose Polyether-Öle geringen Molekulargewichts sind selbstverständlich diejenigen, in denen der Anteil des Molekulargewichtsreglers hoch gewählt wurde (z. B. Alkanol:THF:GE 1:4:2); Polyether hohen Molekulargewichts, also hochviskose Öle, sind solche, in denen der Anteil des Molekulargewichtsreglers klein gewählt wurde (z. B. Alkanol:THF:GE 1:40:15). Durch entsprechende Wahl der Reglermenge können auch Polyether mittlerer Viskositätslagen hergestellt werden.

Ihrem variablen Eigenschaftsprofil entsprechend können Polyether für verschiedene tribologische Anwendungsgebiete in Betracht kommen: Hydraulikfluide, Bremsflüssigkeiten, Metallverarbeitungsflüssigkeiten, Schmiermittel für Kompressoren und Kältemaschinen, Lager- und Getriebeöle für thermisch hoch beanspruchte Aggregate (z. B. Kalander) in der Papier-, Textil- und Kunststoffindustrie.

Die erfindungsgemäßen Polyether können ebenfalls als Wärmeträgeröle in Betracht kommen.

Es ist bekannt, daß durch Zusatz von geeigneten Additiven, vorzugsweise gegen Oxidation, Korrosion, Verschleiß und Schaumbildung zu Polyethern, besonders hochwertige Schmieröle erhalten werden. Dies gilt gleichfalls für die erfindungsgemäßen Polyether. Die geeigneten Additive sind ausgewählt aus der überaus großen Anzahl von bekannten Verbindungen und Stoffen, die in der Literatur zur Verbesserung der Oxidations-, Korrosions-, Verschleiß- und Schaumstabilität von synthetischen oder natürlichen Schmierölen beschrieben sind (vgl. D. Klamann, Schmierstoffe und verwandte Produkte, Verlag Chemie, Weinheim 1982, S. 81 ff).

Die Beispiele sollen die Erfindung näher erläutern; ohne sie darauf zu beschränken.

### Beispiel 1

Eine Mischung aus 4 g n-Decanol und 20 ml wasserfreiem Tetrahydrofuran wird mit 2,2 ml BF₃ · Et₂O versetzt und eine Stunde bei 45 °C gerührt. Anschließend wird ein Gemisch aus 12 g n-Decanol, 180 ml wasserfreiem Tetrahydrofuran und 60 g n-Butylglycidylether langsam hinzugetropft, wobei die Temperatur von 55 °C nicht überschritten wird. Nach beendeter Zugabe läßt man 64 h bei Raumtemperatur nachreagieren. Zur Aufarbeitung versetzt man das Reaktionsgemisch mit einer Lösung von 3,8 g Na₂CO₃ in 20 ml Wasser, rührt eine Stunde bei Raumtemperatur und destilliert dann bei 100 °C Sumpftemperatur und Normaldruck Wasser und Leichtsieder ab. Der resultierende Rückstand wird durch Filtration oder Zentrifugieren von ausgefallenen Feststoffen befreit. Abschließend wird das Öl 2 Stunden bei einem Druck von 0,05 torr auf 200 °C erwärmt, um flüchtige Beimengungen zu entfernen.

| | |
|---|---|
| Ausbeute: | 135,0 g |
| osmotisches Molekulargewicht: | 1 220 |
| Elementaranalyse: | 66,21 %C |
| | 11,44 %H |
| | 22,37 %O |
| Kinematische Viskosität bei 37,8 °C | 146,8 mm²/s |
| 98,9 °C | 24,1 mm²/s |
| Viskositätsindex: | 198 |

### Beispiel 2

Eine Lösung aus 40 ml wasserfreiem THF und 5 g eines Gemisches aus n-Dodecanol und n-Tetradecanol (3:1) wird mit 2,8 ml BF₃ · Et₂O versetzt und eine Stunde bei 45 °C gerührt. Anschließend wird ein Gemisch aus 160 ml wasserfreiem Tetrahydrofuran, 120 g n-Butylglycidylether sowie 16 g eines Gemisches aus n-Dodecanol und n-Tetradecanol langsam hinzugetropft, wobei die Temperatur von 55 °C nicht überschritten wird. Man läßt 20 Stunden bei Raumtemperatur nachreagieren, fügt 4,6 g Soda in 30 ml Wasser hinzu und arbeitet gemäß Beispiel 1 weiter auf.

| | |
|---|---|
| Ausbeute: | 230,4 g |
| osmotisches Molekulargewicht: | 1 490 |
| Elementaranalyse: | 66,82 %C |
| | 11,21 %H |
| | 22,70 %O |
| kinematische Viskosität bei 37,8 °C | 162,7 mm²/s |
| 98,9 °C | 32,3 mm²/s |
| Viskositätsindex: | 245 |

### Beispiel 3

Eine Lösung von 5 g eines Gemisches von n-Dodecanol und n-Tetradecanol 3:1) in 40 ml wasserfreiem Tetrahydrofuran wird mit 2,0 ml BF₃ · Et₂O versetzt und eine Stunde bei 45 °C gerührt. Anschließend wird ein Gemisch aus 160 ml wasserfreiem Tetrahydrofuran, 30 g n-Butylglycidylether und 16 g C₁₂/C₁₄-Alkohol langsam hinzugetropft, wobei die Temperatur von 55 °C nicht überschritten wird. Nach beendeter Zugabe läßt man 20 Stunden bei Raumtemperatur nachreagieren, versetzt das Reaktionsgemisch mit einer Lösung von 3,3 g Soda in 20 ml Wasser und arbeitet gemäß Beispiel 1 weiter auf.

| | |
|---|---|
| Ausbeute: | 100 g |
| osmotisches Molekulargewicht: | 1 070 |
| Elementaranalyse: | 67,48 %C |
| | 11,52 %H |
| | 20,89 %O |
| kinematische Viskosität bei 40 °C | 93,7 mm²/s |
| 100 °C | 16,6 mm²/s |
| Viskositätsindex | 191 |

### Beispiel 4

Eine Lösung von 3,1 g eines Gemisches aus n-Dodecanol und n-Tetradecanol (3:1) in 18 ml wasserfreiem Tetrahydrofuran wird mit 1,4 ml BF₃ · Et₂O versetzt und eine Stunde lang bei Raumtemperatur gerührt. Anschließend läßt man eine Lösung aus 39,5 g des oben beschriebenen Alkohol-Gemisches und 103 g n-Butylglycidylether so langsam zutropfen, daß die Reaktionstemperatur 55 °C nicht überschreitet. Nach beendeter Zugabe wird weitere 22 Stunden bei Raumtemperatur gerührt, dann mit einer Lösung von 2,3 g Soda in 20 ml Wasser versetzt und wie in Beispiel 1 weiter aufgearbeitet.

| | |
|---|---|
| Ausbeute: | 118,6 g |
| osmotisches Molekulargewicht: | 870 |
| Elementaranalyse: | 67,28 %C |
| | 11,32 %H |
| | 21,35 %O |
| kinematische Viskosität bei 40 °C | 49,3 mm²/s |
| 100 °C | 9,3 mm²/s |
| Viskositätsindex: | 175 |

### Beispiel 5

Eine Lösung von 13,0 g eines Gemisches von n-Hexadecanol und n-Octadecanol (1:2) in 100 ml wasserfreiem Tetrahydrofuran wird mit 3,2 ml BF₃ · Et₂O versetzt und eine Stunde bei 45 ^{o}C gerührt. Anschließend tropft man eine Lösung aus 95,6 g n-Butylglycidylether und 200 ml wasserfreiem THF langsam hinzu, wobei die Temperatur von 55 °C nicht überschritten wird. Nach beendeter Zugabe rührt man 68 Stunden bei Raumtemperatur, gibt dann eine Lösung von 5,3 g Soda in 30 ml Wasser hinzu und arbeitet wie üblich weiter auf.

| | |
|---|---|
| Ausbeute: | 258,6 g |
| osmotisches Molekulargewicht: | 1 920 |
| Elementaranalyse: | 66,11 %C |
| | 11,19 %H |
| | 22,82 %O |
| kinematische Viskosität bei 40 °C | 480,2 mm²/s |
| 100 °C | 82,3 mm²/s |
| Viskositätsindex: | 256 |

### Beispiel 6

Zu einer Lösung von 10 g Decanol in 25 ml wasserfreiem Tetrahydrofuran werden 1,8 ml Bortrifluorid-Etherat gegeben. Man rührt eine Stunde bei 45 °C und tropft dann ein Gemisch aus 83,0 g n-Decylglycidylether und 125 ml wasserfreiem Tetrahydrofuran so hinzu, daß die Temperatur von 55 ^{o}C nicht überschritten wird. Nach beendeter Zugabe läßt man 22 Stunden bei Raumtemperatur nachreagieren. Zur Aufarbeitung wird das Reaktionsgemisch mit einer Lösung von 3,0 g Soda in 50 ml Wasser versetzt und gemäß Beispiel 1 weiter behandelt.

| | |
|---|---|
| Ausbeute: | 145 g |
| osmotisches Molekulargewicht: | 1 650 |
| Elementaranalyse: | 70,66 %C |
| | 12,28 %H |
| | 17,62 %O |
| kinematische Viskosität bei 40 °C | 173,1 mm²/s |
| 100 °C | 27,6 mm²/s |
| Viskositätsindex: | 198 |

### Beispiel 7

Zu einer Lösung von 11,5 g 1,5-Cyclooctandimethanol in 30 ml wasserfreiem Tetrahydrofuran werden 2,4 ml Bortrifluorid-Diethyletherat gegeben. Man rührt eine Stunde bei 45 °C und tropft dann ein Gemisch aus 65,0 g n-Butylglycidylether und 220 ml wasserfreiem Tetrahydrofuran so hinzu, daß die Temperatur von 55 °C nicht überschritten wird. Nach beendeter Zugabe läßt man 22 Stunden bei Raumtemperatur nachreagieren. Zur Aufarbeitung wird das Reaktionsgemisch mit einer Lösung von 4,0 g Na₂CO₃ in 90 ml Wasser versetzt und gemäß Beispiel 1 weiter behandelt.

| | |
|---|---|
| Ausbeute: | 150,2 g |
| osmotisches Molekulargewicht: | 1 220 |
| Elementaranalyse: | 66,01 %C |
| | 11,21 %H |
| | 23,27 %O |
| kinematische Viskosität bei 40 °C | 318,3 mm²/s |
| 100 °C | 42,5 mm²/s |
| Viskositätsindex: | 188 |

## Patentansprüche

1. Polyether, erhältlich durch Polymerisation von Tetrahydrofuran mit Glycidylethern der Formel 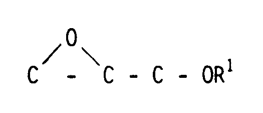 in Gegenwart von Alkanolen der Formel R²-OH, wobei
R¹ = Alkylgruppen mit 3 - 20 Kohlenstoffatomen und
R² = Alkylgruppen mit 8 - 24 Kohlenstoffatomen, sowie Cycloalkylgruppen mit 6 - 12 Kohlenstoffatomen im Ring, oder Hydroxyalkylgruppen mit 4 - 36 Kohlenstoffatomen, sowie Cycloalkanolgruppen mit 6 - 15 Kohlenstoffatomen im Ring bedeuten,
ausgenommen Glycidyl-n-propylether.

2. Polyether gemäß Anspruch 1,
dadurch gekennzeichnet,
daß das molare Einsatzverhältnis von Alkanol zu Tetrahydrofuran und Glycidylether 1:5 bis 1:200 beträgt.

3. Polyether gemäß Anspruch 1,
dadurch gekennzeichnet,
daß das molare Einsatzverhältnis von Tetrahydrofuran zu Glycidylether 1:6 bis 15:1 beträgt.

4. Polyether gemäß Anspruch 3,
dadurch gekennzeichnet,
daß das molare Einsatzverhältnis von Tetrahydrofuran zu Glycidylether bevorzugt 1:3 bis 8:1 beträgt.

5. Polyether gemäß Anspruch 3,
dadurch gekennzeichnet,
daß das molare Einsatzverhältnis von Tetrahydrofuran zu Glycidylether besonders bevorzugt 1:1 bis 5:1 beträgt.

6. Verfahren zur Herstellung der Polyether gemäß Anspruch 1,
dadurch gekennzeichnet,
daß die Copolymerisation in an sich bekannter Weise in Gegenwart der Molekulargewichtsregler mittels Lewis-Säuren als Katalysator in einer Menge von 0,01 bis 5 Gew.-%, bezogen auf das Reaktionsgemisch bei Temperaturen von -10 °C bis 100 °C und bei Normaldruck oder erhöhtem Druck durchgeführt wird.

7. Verwendung von Polyethern gemäß Anspruch 1 als Schmierstoffe.

8. Verwendung von Polyethern gemäß Anspruch 7 als Getriebeschmierstoffe.

9. Verwendung von Polyethern gemäß Ansprüchen 7 und 8 in Abmischung mit Mineralölen.

## Claims

1. Polyethers, obtainable by polymerisation of tetrahydrofuran with glycidyl ethers of the formula 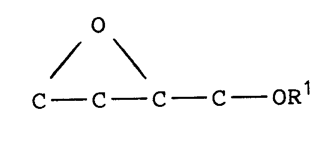 in the presence of alkanols of the formula R²-OH, wherein
R¹ = alkyl groups with 3 - 20 carbon atoms and
R² = alkyl groups with 8 - 24 carbon atoms, and cycloalkyl groups with 6 - 12 carbon atoms in the ring, or
hydroxyalkyl groups with 4 - 36 carbon atoms, and cycloalkanol groups with 6 - 15 carbon atoms in the ring,
with the exception of glycidyl-n-propyl ether.

2. Polyethers according to claim 1,
characterized in that
the molar use ratio of alkanol to tetrahydrofuran and glycidyl ether is 1:5 to 1:200.

3. Polyethers according to claim 1,
characterized in that
the molar use ratio of tetrahydrofuran to glycidyl ether is 1:6 to 15:1.

4. Polyethers according to claim 3,
characterized in that
the molar use ratio of tetrahydrofuran to glycidyl ether is preferably 1:3 to 8:1.

5. Polyethers according to claim 3,
characterized in that
the molar use ratio of tetrahydrofuran to glycidyl ether is particularly preferably 1:1 to 5:1.

6. Process for the production of the polyethers according to claim 1,
characterized in that
the copolymerization is carried out in per se known manner in the presence of the molecular weight regulators by means of Lewis acids as catalyst in a quantity of 0.01 to 5 wt.%, relative to the reaction mixture at temperatures of -10°C to 100°C and at normal pressure or increased pressure.

7. Use of polyethers according to claim 1 as lubricants.

8. Use of polyethers according to claim 7 as gear lubricants.

9. Use of polyethers according to claims 7 and 8 mixed with mineral oils.

## Revendications

1. Polyéthers que l'on obtient par polymérisation du tétrahydrofuranne avec des éthers glycidiques de formule : 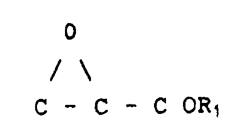 en présence d'alcanols de formule R²OH dans lesquelles:
R¹ = radicaux alcoyle ayant 3 à 20 atomes de Carbone et,
R² = radicaux alcoyle ayant 8 à 24 atomes de carbone ainsi que des radicaux cycloalcoyle ayant 6 à 12 atomes de carbone dans le cycle ou des radicaux hydroxyalcoyle ayant de 4 à 36 atomes de carbone ainsi que des radicaux cycloalcanol ayant 6 à 15 atomes de carbone dans le cycle,
à l'exception du n-propyléther de glycidyle.

2. Polyéthers selon la revendication 1, caractérisé en ce que le rapport molaire d'utilisation d'alcanol au tétrahydrofuranne et à l'éther de glycidyle s'élève à 1:5 à 1:200.

3. Polyéthers selon la revendication 1, caractérisé en ce que le rapport molaire d'utilisation du tétrahydrofuranne à l'éther de glycidyle s'élève de 1:6 à 15:1.

4. Polyéthers selon la revendication 3, caractérisé en ce que le rapport molaire d'utilisation du tétrahydrofuranne à l'éther de glycidyle s'élève de préférence de 1:3 à 8:1.

5. Polyéthers selon la revendication 3, caractérisé en ce que le rapport molaire d'utilisation du tétrahydrofuranne à l'éther de glycidyle s'élève d'une manière particulièrement préférée de 1:1 à 5:1.

6. Procédé d'obtention des polyéthers selon la revendication 1, caractérisé en ce que la copolymérisation est effectuée d'une manière connue en soi en présence d'un régulateur de poids moléculaire à l'aide d'acides de Lewis comme catalyseur en quantité allant de 0,01 à 5 % en poids rapporté au mélange réactionnel, à des températures allant de -10°C à 100°C et à des pressions normales ou à une pression accrue.

7. Utilisation des polyéthers selon la revendication 1 comme lubrifiant.

8. Utilisation des polyéthers selon la revendication 7 comme lubrifiants pour transmissions.

9. Utilisation des polyéthersselon les revendications 7 et 8 en mélange avec des huiles minérales.
